# EUROPEAN PATENT APPLICATION

(11) **EP 4 063 699 A1**
(43) Date of publication of application: **28.09.2022**
(21) Application number: 21425012.8
(22) Date of filing: 22.03.2021
(51) Int. Cl.: F16J 15/3276, F16J 15/3204

(54) **SEALING GASKET FOR A ROTATING SHAFT**

(71) Applicant: SIT S.P.A., 35129 Padova (IT)
(72) Inventor: Teobaldelli, Gabriele, 35129 Padova (PD) (IT)
(74) Representative: Petraz, Gilberto Luigi

(57) **Abstract**

Sealing gasket (10) for a member rotating with respect to a fixed structure. The sealing gasket (10) has two external surfaces (16, 17) parallel to each other, which define its total thickness (Yl), and comprises, in a single body, a central portion (13) with an annular shape, a peripheral portion (14) integral with an external part of the central portion (13) and an internal annular lip (15), integral with an internal part of the central portion (13) and having a free end (18) that defines a central hole (20) in which the rotating member (11) can be housed precisely, or with interference. A peripheral annular groove (27) is made in the peripheral portion (14), in a substantially median position with respect to the two external surfaces (16, 17) of the sealing gasket (10) and is configured to be coupled to the fixed structure, so as to hold the sealing gasket stationary with respect to the latter.

## Description

### FIELD OF THE INVENTION

The present invention concerns a sealing gasket, or sealing ring, for a rotating member, in particular a sealing gasket made of rubber, rubber-based elastomers, or other materials having similar characteristics, usable as a fluidic sealing member and as a barrier against the dirt in a rotating member, for example the shaft of an electric motor, or a spacer associated with it, of a ventilation apparatus.

A particular application of the sealing gasket according to the present invention is the sector of pellet stoves, in which there are particular operating conditions, such as high heat and the acid fumes produced by them, which are the main problem to be overcome.

### BACKGROUND OF THE INVENTION

It is known that in various applications where it is necessary to use rotating members, for example in ventilation apparatuses, in which a rotating member makes an impeller rotate, with each rotating member sealing gaskets, or sealing rings, are associated, to prevent the dispersion of fluids, such as air, along the external surface of the rotating member.

Rubber seals are known, annular in shape and provided with both a central annular portion and also an internal lip integral with it and configured to contact the cylindrical surface of the rotating member.

Normally the sealing gaskets are attached by their peripheral part to a fixed structure, therefore they must be shaped in such a way as to guarantee adequate and constant contact with the rotating member and at the same time so as not to generate excessive friction with the rotating member when it rotates.

However, known sealing gaskets are not always fully satisfactory, both with regard to their fluidic seal, which they must exert in contact with the rotating member, and with regard to the friction generated during the rotation of the rotating member itself.

Furthermore, the positioning of the sealing gaskets on a fixed structure may prove to be not very precise and not very stable, resulting in unwanted movements of the sealing gasket during the rotation of the rotating member.

There is therefore a need to perfect a sealing gasket for a rotating member which can overcome at least one of the disadvantages of the state of the art.

In particular, one purpose of the present invention is to provide a sealing gasket for a rotating member which has an optimal behavior, both with regard to the fluidic seal it must exert in contact with the rotating member, and also with regard to the friction generated during the rotation of the rotating member, in particular, but not only, when the sealing gasket is associated with rotating members in the sector of pellet stoves, where there are particular operating conditions, such as great heat and acid fumes produced by them.

Another purpose of the present invention is to provide a sealing gasket for a rotating member, in which its assembly and positioning on a fixed structure can be carried out in a simple manner, and which at the same time is precise and stable over time, in such a way that the sealing gasket remains suitably stationary in position during the rotation of the rotating member.

Another purpose of the present invention is to provide a sealing gasket for a rotating member which is also extremely effective in creating a barrier against the passage of dirt along the cylindrical surface of the rotating member.

Another purpose of the present invention is to provide a sealing gasket for a rotating member which has dimensional characteristics which make it simple to manufacture, extremely compact, effective, reliable and long-lasting, without deteriorating.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a sealing gasket according to the present invention, for a member rotating with respect to a fixed structure, has two external surfaces parallel to each other, which define its total thickness and comprises, in a single body, a central portion with an annular shape, a peripheral portion integral with an external part of the central portion as above, and an internal annular lip, integral with an internal part of the central portion as above and having a free end which defines a central hole in which the rotating member as above can be housed with precision, with a desired and calibrated interference.

In accordance with one aspect of the present invention, the sealing gasket also comprises a peripheral annular groove made in the peripheral portion as above, in a substantially median position with respect to the two external surfaces as above; moreover, the peripheral annular groove as above has a radial cross-section with a polygonal shape, with two sides parallel to the external surfaces as above and one side open toward the outside, and is configured to be coupled to the fixed structure as above, so as to hold the sealing gasket stationary with respect to the latter.

Therefore, advantageously, the behavior of the sealing gasket according to the present invention, thanks to its new and original conformation, is optimal both as regards the fluidic seal that it has to exert in contact with the rotating member, and also as regards the friction generated during the rotation of the rotating member itself; moreover, its assembly onto a fixed structure is simple to carry out, as well as precise and stable, even during the rotation of the rotating member and also in the event of possible vibrations produced by the latter or by the other rotating members with which it can be associated.

In accordance with another aspect of the present invention, the central portion as above has a substantially rectangular radial section, defined by the external surfaces as above and having a first radial size, which is substantially equal to a third of the total thickness of the sealing gasket as above.

In accordance with another aspect of the present invention, the internal annular lip as above has a tapered shape gradually decreasing from an internal part thereof, which is located in the proximity of, or in contact with, the central portion as above, to the free end as above.

In accordance with another aspect of the present invention, the free end as above has a first thickness and the internal part as above as has a second thickness, which is between about 2.5 and about 3.5 times greater than the first thickness as above. Furthermore, the internal annular lip as above, at least before being coupled to the rotating member as above, is totally comprised between the external surfaces of the sealing gasket as above.

In accordance with another aspect of the present invention, the internal annular lip as above comprises a lateral surface facing toward the axis of the central hole as above and inclined with respect to an axial surface of the central portion as above by a first angle which is comprised between about 13° and about 25°, preferably of about 20°.

In accordance with another aspect of the present invention, the free end as above comprises a terminal surface comprised between a first annular edge, which defines the central hole as above, and a second annular edge; moreover, the terminal surface as above is inclined with respect to a plane, parallel to the external surfaces as above and passing through the second annular edge as above, by a second angle comprised between about 25° and about 35° and preferably of about 30°.

In accordance with another aspect of the present invention, the peripheral annular groove as above is defined by a first annular part of the peripheral portion as above having a second radial size, and by a second annular part of the peripheral portion as above, parallel to the first annular part as above and having a third radial size smaller than the second radial size as above.

In accordance with another aspect of the present invention, the thickness of the first annular part as above and the thickness of the second annular part as above are each substantially equal to a third of the total thickness as above; moreover, the peripheral annular groove as above has a height, or longitudinal size, that is, parallel to the axis of the central hole as above, substantially equal to the thickness of the first annular part as above and the thickness of the second annular part as above.

In accordance with another aspect of the present invention, the second annular part as above comprises an external wall inclined by a third angle, comprised between about 40° and about 50°, preferably of about 45°, with respect to one of the two external surfaces as above.

In accordance with another aspect of the present invention, the internal annular lip as above is connected to the central portion as above by means of an arched connection having a determinate internal radius of curvature and an external radius of curvature comprised between about 2.2 and about 3 times the internal radius of curvature as above.

In accordance with other embodiments of the present invention, the sealing gasket is made with a rubber-based compound, rubber-based elastomers, in which the rubber is possibly fluorinated, a combination thereof, or other materials having similar characteristics, so as to have a both a high chemical resistance, so that it can resist even in environments in which acid fumes are developed, such as in pellet stoves, and also a high thermal resistance, for example up to 250°C.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a bottom view of a sealing gasket for a rotating member according to the present invention;
- fig. 2 is a section view of the sealing gasket along line II-II of fig. 1;
- fig. 3 is a view of a detail III of fig. 2, on an enlarged scale.

We must clarify that in the present description and in the claims the terms internal, external and upper, with their declinations, have the sole function of better illustrating the present invention with reference to the drawings and must not be in any way used to limit the scope of the present invention, or the field of protection defined by the claims.

The phraseology and terminology used here is also solely for the purposes of description, and cannot be considered as limitative.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

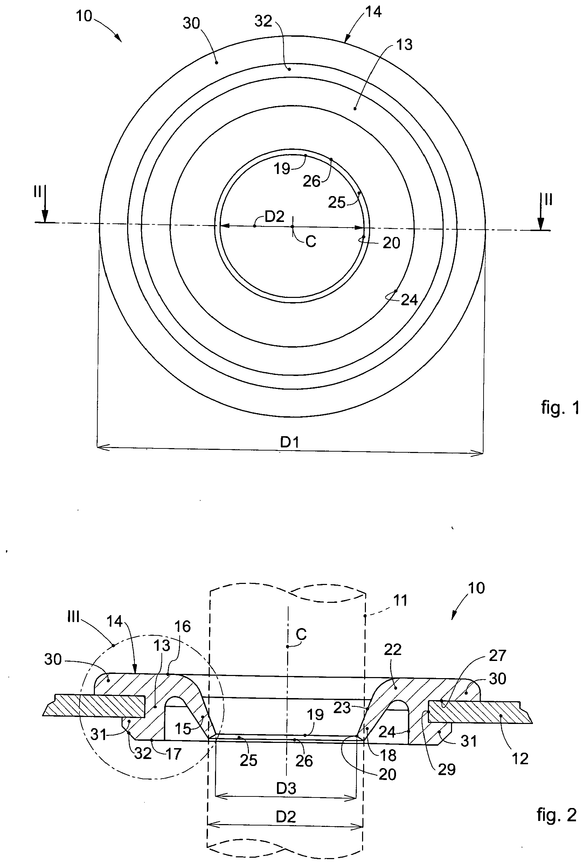

With reference to figs. 1 and 2, a sealing gasket 10 according to the present invention has an annular shape and is configured to be disposed coaxially to, and in contact with, the peripheral surface of a member 11 (shown with a dashed line in fig. 2) rotating with respect to a fixed structure 12.

The rotating member 11 can be, for example, but not necessarily, the drive shaft of a ventilation apparatus provided with an impeller, of a known type and not shown in the drawings, attached onto the drive shaft, or a spacer with a larger diameter than the drive shaft and attached onto the latter.

The fixed structure 12 can be the structure of the ventilation apparatus as above, with respect to which the drive shaft and the impeller as above rotate, or, for example, that of an apparatus of, or associated with, a pellet stove of a known type and not shown in the drawings.

The sealing gasket 10 is preferably made with a rubber-based compound, rubber-based elastomers, in which the rubber is possibly fluorinated, a combination thereof, or other materials having similar characteristics so as to have both a high chemical resistance, so that it can resist even in environments in which acid fumes are developed, such as in pellet stoves, and also a high thermal resistance, for example up to 250°C.

The sealing gasket 10 comprises, in a single body, a central portion 13 with an annular shape, a peripheral portion 14, integral with an external part of the central portion 13, and an internal annular lip 15, integral with an internal part of the central portion 13.

In one embodiment of the present invention, the external diameter D1 of the sealing gasket 10 is comprised between about 20 mm and about 30 mm.

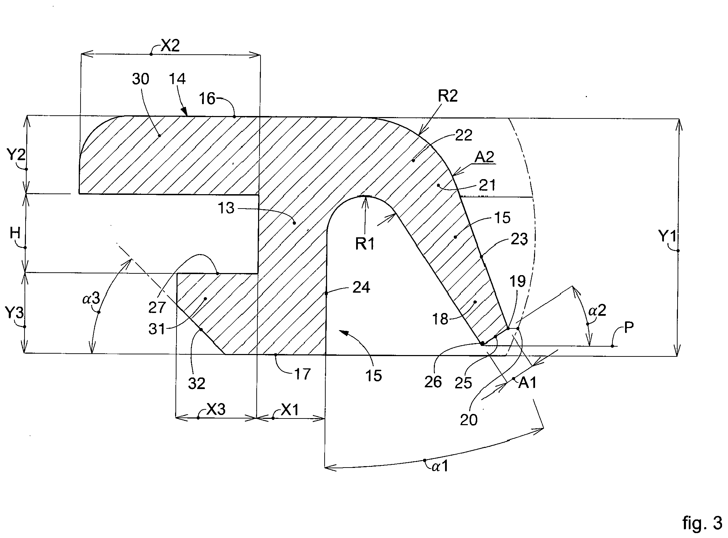

The sealing gasket 10 has a first external surface 16 and a second external surface 17, parallel to each other, which define its total thickness Y1 (fig. 3), which is comprised, for example, between about 3.5 mm and about 4.5 mm.

According to some embodiments of the present invention, the central portion 13 has a substantially rectangular radial section, defined by the external surfaces 16 and 17 and having a first radial size X1, which, for example, is substantially equal to, or slightly smaller than, a third of the total thickness Y1 of the sealing gasket 10.

The internal annular lip 15 has a free end 18, having a first annular edge 19 which defines a central hole 20, the axis C of which (figs. 1 and 2) is perpendicular to the external surfaces 16 and 17. In the central hole 20, the rotating member 11 can be housed with precision, or preferably with a slight interference, as will be described in detail below.

According to some embodiments of the present invention, the ratio between the diameter D2 of the central hole 20 and the external diameter D1 of the sealing gasket 10 is comprised between about 0.3 and about 0.4, therefore the diameter D2 of the central hole 20 is comprised between about 7.2 mm and about 12 mm.

In the present description and in the attached claims, any reference to the diameter D2 of the central hole 20 is intended with the sealing gasket 10 not mounted on the rotating member 11. In fact, when the sealing gasket 10 is mounted on the rotating member 11, the internal annular lip 15 flexes toward the central portion 13 and the diameter D2 of the central hole 20 takes on the sizes of the external diameter D3 of the rotating member 11.

The internal annular lip 15 also has an internal part 21 (fig. 3), opposite the end 18, integral with the internal part of the central portion 13 as above by means of an arched connection 22.

The arched connection 22 has an internal radius of curvature R1, which in the example provided here is comprised between about 0.5 mm and about 1 mm, and an external radius of curvature R2, which in the example provided here is comprised between about 2.0 and about 3 times the internal radius of curvature R1.

Furthermore, the internal annular lip 15 has a tapered shape and progressively decreasing from its internal part 21 to its end 18, so that, also thanks to the arched connection 22, it is flexible and deformable, that is, able to adapt to the external diameter D3 of the rotating member 11, or of a possible element integral with it, such as for example a collar, or an annular spacer. Therefore, when in the present description reference is made to the external diameter D3 of the rotating member 11, this is to be intended as the external diameter of the latter, in the case of a drive shaft, or that of a possible element integral with it, such as for example a spacer, on which the sealing gasket 10 is mounted.

By way of example, the thickness A1 of the end 18 of the internal annular lip 15 is comprised between about 0.3 mm and about 0.7 mm, and the thickness of the internal part 21 of the internal annular lip 15 is comprised between about 2.5 and about 3.5 times the thickness A1 of the end 18.

Furthermore, the diameter D2 of the central hole 20 is slightly smaller than the external diameter D3 as above, for example D2 = from 0.7 to 0.9 D3, so that the internal annular lip 15 can suitably deform, flexing toward the central portion 13, when the sealing gasket 10 is mounted around the rotating member 11, and also exert a correct pressure on the latter, so as to guarantee an excellent fluidic seal and at the same time not cause excessive friction between the sealing gasket 10 itself and the rotating member 11.

The internal annular lip 15 has a lateral surface 23 facing toward the axis C of the central hole 20 and inclined with respect to an axial surface 24 of the central portion 13, parallel to the same axis C, by a first angle α1 which, when the sealing gasket 10 is not mounted on the rotating member 11, is comprised between about 13° and about 25°.

The lateral surface 23 is connected to the first external surface 16 by means of the external surface of the arched connection 22.

The end 18 of the internal annular lip 15 has a terminal surface 25 comprised between the first annular edge 19 and a second annular edge 26. When the sealing gasket 10 is not mounted on the rotating member 11, the terminal surface 25 is inclined with respect to a plane P, parallel to the external surface 17 and passing through the second annular edge 26, by a second angle α2 comprised between about 25° and about 35°.

The peripheral portion 14 is provided with a peripheral annular groove 27 (figs. 2 and 3) configured to be coupled with precision to the fixed structure 12 (fig. 2), so that the sealing gasket 10, once mounted on the latter, remains stationary, even when the rotating member 11 rotates.

Advantageously, the peripheral annular groove 27 is disposed in a substantially median position with respect to the total thickness Y1 (fig. 3) of the sealing gasket 10, so that it is substantially equidistant from the external surfaces 16 and 17.

In particular, the peripheral annular groove 27 preferably has a radial cross-section with a polygonal shape, for example square, or rectangular, with two sides parallel to the external surfaces 16 and 17, a third side parallel to the axial surface 24 of the central portion 13 and a fourth side open toward the outside, in order to allow the insertion of the sealing gasket 10 in a corresponding hole 29 (fig. 2) of the fixed structure 12 and guarantee a correct and stable coupling between them.

In detail, the peripheral annular groove 27 is defined by a first annular part 30 (figs. 1, 2 and 3) of the peripheral portion 14, having a second radial size X2 (fig. 3), measured from the central portion 13, and by a second annular part 31 of the peripheral portion 14, parallel to the first annular part 30 and having a third radial size X3, also measured from the central portion 13. In the example provided here, the third radial size X3 is smaller than the second radial size X2, preferably smaller than half of it.

According to some embodiments of the present invention, the second radial size X2 is from 2.2 to 3 times larger than the third radial size X3. By way of example, the second radial size X2 is comprised between about 3 mm and about 4 mm, therefore the third radial size X3 is comprised between about 1 mm and about 1.82 mm.

According to some embodiments of the present invention, the thickness Y2 of the first annular part 30 and the thickness Y3 of the second annular part 31 are substantially the same as each other.

In the example provided here, the thickness Y2 of the first annular part 30 and the thickness Y3 of the second annular part 31 are equal to, or almost equal to, that is, with a tolerance of about ± 20%, a third of the total thickness Y1 of the sealing gasket 10.

According to some embodiments of the present invention, the height H of the peripheral annular groove 27, that is, the longitudinal size parallel to the axis C of the central hole 20, is comprised between 0.8 and 1.2 times the thickness Y2 or Y3 of one of the annular parts 30 and 31.

Furthermore, the second annular part 31 has an external wall 32 inclined with respect to the second external surface 17 by a third angle α3 comprised between about 40° and about 50°. The external wall 31 promotes the insertion of the sealing gasket 10 into the hole 29 (fig. 2) of the fixed structure 12.

Thanks to the characteristics of size and/or shape of the sealing gasket 10 described above, it is possible to obtain a high efficiency, both in terms of fluidic seal and also in terms of reduction of friction with the rotating member 11. Furthermore, there is also an improvement in the coupling and the stability of the sealing gasket 10 with respect to the fixed structure 12.

The sealing gasket 10 described heretofore, thanks to its shape and to the compound as above with which it is made, can work well and effectively even in conditions of high temperatures and in environments with acid fumes. In fact, from various tests carried out it has emerged that the sealing gasket 10 does not glue when hot, and - above all - not even when cold, for example when the operating state is resumed after a significantly long period of inactivity, as is the case for example of pellet stoves in the warm and/or temperate months.

Furthermore, the above-described geometry of the sealing gasket 10 guarantees maximum air-tight seal with minimum friction.

It is clear that modifications and/or additions of parts may be made to the sealing gasket 10 as described heretofore, without departing from the field and scope of the present invention as defined by the claims.

It is also clear that, although the present invention has been described with reference to some specific examples, a person of skill in the art shall certainly be able to achieve many other equivalent forms of sealing gasket, all coming within the scope of the present invention.

## Claims

1. Sealing gasket (10) for a member (11) rotating with respect to a fixed structure (12), wherein said sealing gasket (10) has two external surfaces (16, 17) parallel to each other, which define its total thickness (Y1), and comprises, in a single body, a central portion (13) with an annular shape, a peripheral portion (14) integral with an external part of said central portion (13) and an internal annular lip (15), integral with an internal part of said central portion (13) and having a free end (18) that defines a central hole (20) in which said rotating member (11) can be housed precisely, with a desired interference, **characterized in that** it also comprises a peripheral annular groove (27) made in said peripheral portion (14), in a substantially median position with respect to said two external surfaces (16, 17), having a radial cross-section of a polygonal shape with two sides parallel to said external surfaces (16, 17) and one side open toward the outside, configured to be coupled to said fixed structure (12).

2. Sealing gasket (10) as in claim 1, **characterized in that** said internal annular lip (15) has a tapered shape progressively decreasing from an internal part (21) thereof, which is located in the proximity of, or in contact with, said central portion (13), to said free end (18).

3. Sealing gasket (10) as in claim 2, **characterized in that** said free end (18) has a first thickness (A1) and said internal part (21) has a second thickness (A2) which is between about 2.5 and about 3.5 times greater than said first thickness (A1).

4. Sealing gasket (10) as in any claim hereinbefore, **characterized in that** said internal annular lip (15) comprises a lateral surface (23) facing toward the axis (C) of said central hole (20), said lateral surface (23) being inclined with respect to an axial surface (24) of said central portion (13) by a first angle (α1) which is comprised between about 13° and about 25°, preferably of about 20°.

5. Sealing gasket (10) as in any claim hereinbefore, **characterized in that** said free end (18) comprises a terminal surface (25) comprised between a first annular edge (19), which defines said central hole (20), and a second annular edge (26) **and in that** said terminal surface (25) is inclined with respect to a plane (P), parallel to said external surfaces (16, 17) and passing through said second annular edge (26), by a second angle (α2) comprised between about 25° and about 35° and preferably of about 30°.

6. Sealing gasket (10) as in any claim hereinbefore, **characterized in that** said central portion (13) has a substantially rectangular radial section, defined by said external surfaces (16, 17) and having a first radial size (XI), which is substantially equal to, or slightly smaller than, a third of said total thickness (Y1).

7. Sealing gasket (10) as in any claim hereinbefore, **characterized in that** said peripheral annular groove (27) is defined by a first annular part (30) of said peripheral portion (14) having a second radial size (X2) and a second annular part (31) of said peripheral portion (14), parallel to said first annular part (30) and having a third radial size (X3) which is smaller than said second radial size (X2).

8. Sealing gasket (10) as in claim 7, **characterized in that** the thickness (Y2) of said first annular part (30) and the thickness (Y3) of said second annular part (31) are each substantially equal to a third of said total thickness (Y1) **and in that** said peripheral annular groove (27) has a height (H), that is, a longitudinal size parallel to the axis of said central hole (20), substantially equal to the thickness (Y2) of said first annular part (30) and the thickness (Y3) of said second annular part (31).

9. Sealing gasket (10) as in claim 7 or 8, **characterized in that** said second annular part (31) comprises an external wall (32) inclined by a third angle (α3), comprised between about 40° and about 50°, preferably of about 45°, with respect to one of said two external surfaces (17).

10. Sealing gasket (10) as in any claim hereinbefore, having a determinate external diameter (D1), **characterized in that** the ratio between the diameter (D2) of said central hole (20) and said determinate external diameter (D1) is comprised between about 0.3 and about 0.4, preferably between 0.34 and 0.38.

11. Sealing gasket (10) as in any claim hereinbefore, **characterized in that** it is made with a rubber-based compound, rubber-based elastomers, in which the rubber is possibly fluorinated, a combination thereof, or other materials having similar characteristics, in order to have both a high chemical resistance, so that it can resist even in environments where acid fumes are developed, such as in pellet stoves, and also a high thermal resistance, for example up to 250°C.

12. Use of a sealing gasket (10) as in any claim hereinbefore to create an air-tight seal on a rotating member (11).
